(19) Europäisches Patentamt
European Patent Office
Office européen des brevets

(11) **EP 1 827 907 B1**

(12) **FASCICULE DE BREVET EUROPEEN**

(45) Date de publication et mention
de la délivrance du brevet:
**10.09.2008 Bulletin 2008/37**

(51) Int Cl.:
***B60R 1/00*** *(2006.01)*    ***B60R 1/10*** *(2006.01)*
***B60R 1/08*** *(2006.01)*    ***G02B 17/02*** *(2006.01)*
***G02B 17/08*** *(2006.01)*

(21) Numéro de dépôt: **05825566.2**

(22) Date de dépôt: **16.12.2005**

(86) Numéro de dépôt international:
**PCT/FR2005/051095**

(87) Numéro de publication internationale:
**WO 2006/064166 (22.06.2006 Gazette 2006/25)**

(54) **SYSTEME DE VISION INDIRECT PERMETTANT DE MINIMISER LES ANGLES MORTS SANS DISTORSION DE L'IMAGE FORMEE**

INDIREKTES SICHTSYSTEM, DAS EINE MINIMIERUNG TOTER WINKEL ERMÖGLICHT, OHNE DAS ERZEUGTE BILD ZU VERZERREN

INDIRECT VISION SYSTEM ENABLING BLIND SPOTS TO BE MINIMIZED WITHOUT DISTORTING THE FORMED IMAGE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **17.12.2004 FR 0453052**

(43) Date de publication de la demande:
**05.09.2007 Bulletin 2007/36**

(73) Titulaire: **SAINT-GOBAIN GLASS FRANCE**
**92400 Courbevoie (FR)**

(72) Inventeurs:
• **COUERY, Aurélie**
**F-78220 Viroflay (FR)**
• **PAYEN, Corinne**
**F-60150 Montmacq (FR)**

(74) Mandataire: **Lucas, Francois**
**Saint-Gobain Recherche**
**39, quai Lucien Lefranc**
**F-93300 Aubervilliers (FR)**

(56) Documents cités:
**EP-A- 1 520 751**    **WO-A-96/15921**
**DE-A1- 3 146 486**    **DE-A1- 3 520 593**
**DE-A1- 10 055 260**    **DE-A1- 19 813 627**
**GB-A- 279 893**    **US-A- 5 526 195**

**Description**

La présente invention concerne le domaine des systèmes de vision indirecte telle que la rétrovision. Par opposition à la vision directe des objets par l'oeil, on désigne au sens de la présente description le terme « vision indirecte » par la vision d'un objet au moyen d'un système auxiliaire comprenant par exemple un miroir, par l'intermédiaire duquel une image dudit objet est restituée avec ou sans agrandissement ou déformations.

La présente invention se rapporte plus particulièrement aux rétroviseurs par exemple utilisés dans les véhicules automobiles. Le système de rétrovision selon l'invention permet d'améliorer notablement la sécurité routière. Une telle amélioration est obtenue en réduisant les angles morts, c'est à dire le domaine ou champ de vision qui reste inaccessible au conducteur, notamment lorsque celui-ci effectue ou s'apprête à effectuer une manoeuvre de dépassement. En outre, l'image formée dans le rétroviseur selon l'invention ne subit pas ou pratiquement pas de déformation ou de distorsion.

Une bonne rétrovision extérieure est un élément essentiel de la sécurité routière. Dans la très grande majorité des automobiles actuelles, la rétrovision extérieure est assurée par un miroir plan situé à l'extérieur du véhicule. Le principal problème de ce système est lié à la dimension forcément réduite du miroir et par conséquent à la présence d'angles morts, c'est à dire de zones non accessibles à la vision du conducteur. La présence de telles zones oblige le conducteur à accentuer les contrôles en vision directe, notamment dans les situations de changements de file, de dépassements, de ralentissements etc..

En 2002, on estime qu'environ 10% des accidents étaient dus à des erreurs de conduite nées de l'existence et de l'étendue des angles morts lors de telles manoeuvres.

Afin de diminuer voire de supprimer les angles morts, plusieurs solutions ont été proposée. Un système de rétrovision pour véhicule comprenant les caractéristiques du préambule de la revendication 1 est connu du document DE 3 146 486 A1.

Selon une première solution, par exemple illustrée par le brevet FR 2,794,700, une caméra permet la transmission des informations sur un écran à l'intérieur du véhicule. Cette solution ne rend cependant pas bien compte des distances et surtout inclus des éléments électroniques susceptibles de tomber en panne, ce qui implique l'immobilisation du véhicule pour le temps de la réparation, si aucun système auxiliaire n'est prévu.

Selon une seconde solution, déjà mise en oeuvre sur certains véhicules haut de gamme, on a proposé des rétroviseurs présentant deux parties : une partie conventionnelle plane se prolongeant par une partie asphérique. La partie asphérique, la plus éloignée du conducteur, est constituée par un miroir asphérique, c'est à dire ne présentant un rayon constant que dans un plan, de telle façon que le champ de vision du conducteur soit sensiblement élargi. Cette solution, si elle permet de diminuer fortement l'angle mort en doublant l'angle de rétrovision, induit cependant des déformations optiques et une diminution de la taille de l'image restituée. De telles réduction et/ou déformations accentuent de ce fait grandement la difficulté de perception de la taille, de la vitesse et de la distance des véhicules entrant dans le champ de ladite rétrovision et nécessitent de la part du conducteur un temps d'adaptation qui peut être plus ou moins long.

La présente invention se rapporte à un système de rétrovision permettant de résoudre efficacement les problèmes engendrés par les précédents dispositifs. En particulier, le système selon l'invention permet de réduire très fortement les angles morts tout en restituant au conducteur une image, par exemple du véhicule qui le double, pratiquement exempte de déformation et ayant de préférence une taille identique, légèrement supérieure ou se rapprochant très sensiblement de celle qu'aurait ledit véhicule, si celui ci était observé par l'intermédiaire d'un miroir plan conventionnel. Selon l'invention l'objet peut ainsi être agrandi pour une meilleure visibilité. Un tel système permet de façon évidente une très nette amélioration de la sécurité ainsi que du confort de conduite, notamment dans les situations telles que les changements de file, les dépassements ou encore les ralentissements.

L'invention peut notamment être mise en oeuvre de différentes manières et peut avoir différents objectifs, par exemple :

- améliorer la rétrovision en réduisant les angles morts sans réduire la taille du rétroviseur extérieur,
- conserver une même rétrovision mais réduire la taille du rétroviseur extérieur, de façon à améliorer l'aérodynamisme et réduire ainsi de façon sensible la consommation de carburant du véhicule,
- améliorer la rétrovision et réduire la taille du rétroviseur.

Selon un autre aspect de l'invention, celle-ci peut également être utilisée pour corriger les déformations de l'image restituée par un dioptre constitué par une surface vitrée non plane, par exemple la lunette arrière du véhicule.

Plus particulièrement, l'invention se rapporte à un système de rétrovision pour véhicule automobile comprenant un ensemble catadioptrique d'au moins un rétroviseur extérieur ou intérieur comprenant un miroir non plan et au moins un dioptre formant partie d'une vitre latérale du véhicule ou intégré à celle-ci, ledit miroir et ledit dioptre étant configurés et agencés de telle manière que l'image de l'objet restituée par l'ensemble miroir-dioptre ne soit pas ou sensiblement pas déformée et de telle manière que l'angle mort ou la zone non couverte par ledit système soit minimisé. Par angle mort minimisé, on entend qu'à surface égale des miroirs, le champ de vision inaccessible au conducteur est inférieur à celui obtenu grâce à un rétroviseur constitué par un miroir plan.

Selon un mode avantageux de l'invention, ledit miroir et ledit dioptre sont également configurés et agencés de telle manière que l'image restituée de l'objet par l'ensemble miroir-dioptre soit sensiblement identique ou agrandie par rapport à celle obtenue par un miroir plan. Par exemple, les dimensions de l'image restituée par l'ensemble miroir-dioptre sont comprises entre environ 1 fois et environ 2 fois celles obtenues par un miroir plan, de préférence entre environ 1 et environ 1,5 fois celles obtenues par un miroir plan.

Avantageusement, le système de rétrovision pour véhicule automobile tel que précédemment décrit comprend un rétroviseur incluant un miroir non plan et un dioptre formant partie de la vitre du véhicule ou intégré à celle-ci. Par intégré on entend que ledit dioptre peut par exemple être collé à une vitre latérale avant du véhicule ou former au moins une partie de celle-ci. Par « collé », on entend un collage optique, c'est à dire que le collage est effectué selon toute technique permettant de ne pas modifier les caractéristiques optiques de l'ensemble dioptre-verre.

Le miroir non plan selon l'invention est en général du type sphérique convexe mais tout autre miroir non plan peut être utilisé, par exemple un miroir du type sphérique concave, torique etc...

Le dioptre selon l'invention présente au moins une face du type sphérique concave ou convexe, torique.

Avantageusement on peut choisir un dioptre du type lentille mince ou du type lentille de Fresnel. Sans sortir du cadre de l'invention, ladite lentille est convergente ou divergente et de préférence convergente.

Selon un mode de réalisation possible, le dioptre est fabriqué en verre ou de préférence dans une matière plastique dure telle que le polycarbonate.

Selon un mode de réalisation particulier, ledit dioptre est constitué d'une plaque de verre feuilleté intégrant un feuillet de matière plastique, tel que le PVB (poly-vinyl-butyral), d'indice optique variable.

Par exemple le dioptre peut constituer tout ou partie d'une fixe avant d'une vitre avant latérale d'un véhicule automobile.

L'invention se rapporte également à une vitre latérale avant pour véhicule automobile comprenant ou incorporant un dioptre tel que précédemment décrit ainsi qu'au véhicule automobile intégrant un tel dioptre ou le système de rétrovision précédemment décrit.

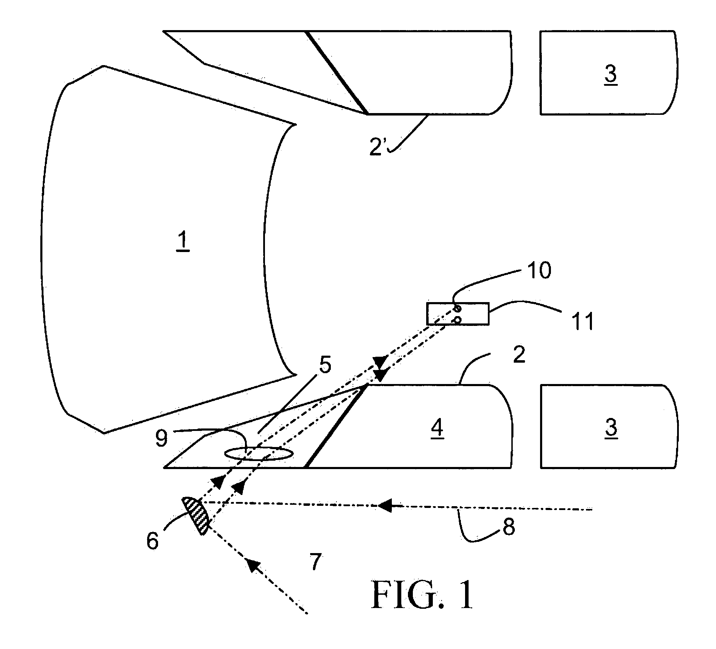

L'invention sera mieux comprise à la lecture qui suit de deux exemples de réalisation de l'invention, illustrés respectivement par les figures 1 à 6 ci-jointes.

Ces exemples sont fournis à titre purement illustratif et ne doivent sous aucun des aspects décrits être considérés comme limitant l'étendue de la présente invention.

La figure 1 illustre un premier mode de réalisation d'un système de rétrovision selon l'invention incluant un dioptre incorporé à la vitre latérale avant d'un véhicule automobile associé à un rétroviseur disposé à l'extérieur de l'habitacle.

La figure 2 illustre un deuxième mode de réalisation d'un système de rétrovision selon l'invention incluant un dioptre incorporé à la vitre latérale avant d'un véhicule automobile associé à un rétroviseur disposé à l'intérieur de l'habitacle.

La figure 3 est une représentation schématique du repère optique constitué par l'axe visuel du conducteur.

La figure 4 montre l'image finale obtenue de la mire pour la simulation d'un rétroviseur asphérique selon la technique antérieure.

la figure 5 schématise l'image obtenue par le miroir convexe avant correction.

La figure 6 illustre l'image de la mire perçue par le conducteur après correction par le dioptre inséré sur la vitre avant du véhicule.

Sur la figure 1 sont représentées vues de dessus les différentes vitres équipant un véhicule automobile, à savoir le pare brise 1, les vitres latérales avant droite 2 et gauche 2' et les vitres arrières latérales 3. Les vitres latérales 2 comprennent une partie coulissante 4 en verre et une partie fixe ou fixe avant 5 dont au moins une partie 9 est en polycarbonate. Le rétroviseur comprenant un miroir sphérique convexe 6 selon l'invention est configuré, positionné et réglé de telle façon que l'ensemble des rayons lumineux venant des différentes directions comprises entre les deux extrêmes représentés par les traits discontinus 7 et 8, puissent être réfléchis par ledit miroir 6 vers la partie en polycarbonate 9 de la fixe avant 5. Tel que cela sera décrit dans la suite de la description, la partie en polycarbonate 9 joue avantageusement le rôle d'un dioptre. L'image d'un véhicule transmise par le miroir convexe 6, dont les dimensions sont réduites et présentant des déformations optiques, est corrigée par le dioptre 9. Celui-ci est selon l'invention configuré de telle manière qu'une image normale soit restituée aux yeux 10 du conducteur. Par le terme « normale », on entend que ladite image déformée et réduite est redressée et remise à une échelle sensiblement identique du véhicule à celle qu'aurait le conducteur en utilisant uniquement un miroir plan classique. Par image normale, on peut également entendre selon l'invention une image sensiblement sans déformation, au sens de la norme européenne 2003/97/CE.

Selon l'invention, les dimensions du miroir 6 et du dioptre 9 sont adaptées par construction de telle façon que la correction puisse s'effectuer quel que soit le point de vision du conducteur notamment en fonction de sa position de conduite, de sa taille et de sa morphologie, par exemple au sens de la norme européenne 2003/97/CE. Dans le plan de projection de la figure 1, l'ensemble des positions possibles est par exemple schématisé par le rectangle 11. On peut également prévoir selon l'invention des moyens de réglage du rétroviseur directement accessibles au conducteur.

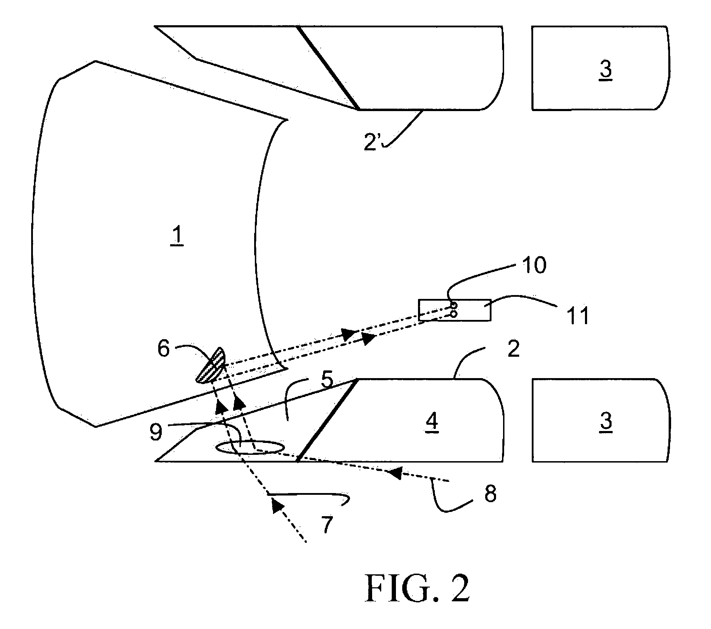

La figure 2 illustre un autre mode de réalisation possible de l'invention analogue au précédent mais dans lequel le rétroviseur est cette fois disposé à l'intérieur de l'habitacle du véhicule. Sur cette figure, une même numérotation a été conservée pour désigner des éléments identiques ou assurant la même fonction que dans le mode précédent. Selon ce mode, les rayons lumineux traversent le dioptre en polycarbonate 9 présent sur la fixe avant 5 qui a une double fonction de déviation vers le miroir intérieur convexe 6 desdits rayons et de correction « par avance » des déformations et réductions induites par le miroir convexe. Comme dans le mode précédent, le conducteur percevra une image normale, au sens précédemment défini.

Les exemples de réalisation de l'invention qui suivent, non limitatifs, sont donnés dans le but d'illustrer certains modes possibles de réalisation du présent système de rétrovision. Dans ces deux exemples, on envisage une situation commune de dépassement par un autre véhicule. On a choisi de modéliser l'image par exemple d'un véhicule situé à 10 mètres en arrière du sommet d'un rétroviseur externe comprenant un miroir convexe de rayon 0,450m.

**Exemple 1:**

Dans ce premier exemple, on a cherché à calculer, dans le cas de l'exemple de réalisation de l'invention illustré par la figure 1, les caractéristiques optiques minimales des différents éléments constituant le système de rétrovision décrit.

Selon les principes bien connus de l'optique géométrique, si A est l'objet (le véhicule), A' l'image de l'objet par le miroir sphérique convexe 6, S le bord du miroir 6 et C le centre de la sphère dans laquelle a été découpé le miroir, les quatre points se situant sensiblement sur l'axe optique, la réduction induite par le miroir convexe est donnée par la relation

$$\gamma = A'/A = CA'/CA$$

avec :

$$\frac{1}{CA} + \frac{1}{CA'} = \frac{2}{CS}$$

Si on néglige les imprécisions dues au fait que les rayons ne sont pas tous parfaitement parallèles à l'axe optique, l'image déformée du véhicule se forme donc derrière le miroir à une distance CA'= 0,230m.

L'objet est réduit de 97,7% par le miroir convexe.

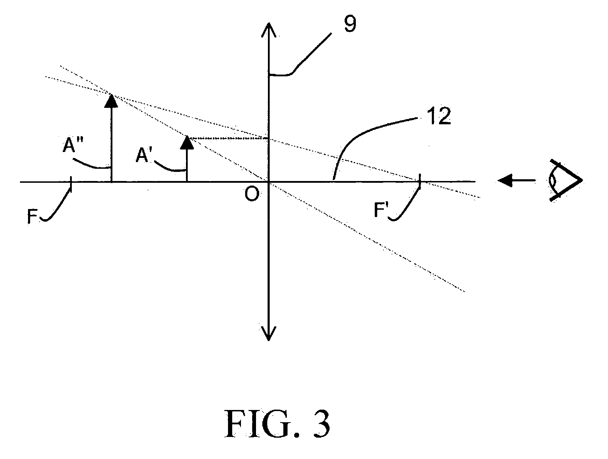

On a calculé ensuite, à partir de cette image déformée et réduite, le rayon de courbure minimum que devrait adopter un dioptre selon l'invention, en considérant dans un deuxième temps le repère optique constitué par l'axe visuel 12 du conducteur (figure 3).

Dans le cas de la Mégane II® commercialisée par la société Renault, le rétroviseur est situé à 0,253 m de la vitre latérale, c'est à dire du dioptre.

Dans le repère optique constitué par l'axe visuel du conducteur on peut alors déterminer la distance OA' entre le centre du dioptre O, qu'on choisit être une lentille mince et l'image A' du véhicule générée par le miroir convexe:

$$OA' = OC + CA' = 0,253 + 0,230 = 0,483 \text{ m.}$$

Selon l'invention, on recherche au final une image réelle et non distordue du véhicule dans le repère optique de l'axe visuel du conducteur. On peut avantageusement utiliser une lentille convergente, agencée de telle manière que l'image corrigée A" de A' se forme entre le centre O de la lentille et le point focal objet F de la lentille (figure 3).

On voit sur la construction de la figure 3 que dans ce cas il est possible d'obtenir un agrandissement de l'image A'. Le choix d'une lentille convergente pour laquelle le foyer image objet F est supérieur ou égal à 0,483 m permet avantageusement d'obtenir une image finale A" dont la taille se rapproche de celle obtenue dans le cas classique de l'utilisation d'un miroir plan.

Pour des raisons d'esthétique et d'aérodynamisme de la voiture on peut choisir que la face extérieure du dioptre soit plane. Dans ce cas, par application de la relation :

$$\frac{-1}{F} = (n-1)(\frac{1}{R1} - \frac{1}{R2})$$

avec n l'indice du dioptre,

- n l'indice du dioptre (n=1,585 pour le polycarbonate),
- R1 est le rayon de la face extérieure du dioptre (coté rétroviseur). Si la face est plane, R1 = ∞,
- R2 est le rayon de la face intérieure du dioptre (coté habitacle),

on calcule que le rayon de courbure minimal R2 du dioptre sur sa face intérieure doit être supérieur à 0,284 m.

On démontre ainsi que la présente invention peut être mise en oeuvre sans difficulté ou nécessité de modification de la position du ou des rétroviseurs existant sur les véhicules actuels.

**Exemple 2 :**

Dans cet exemple, on a cherché à modéliser, pour des conditions similaires à celles de l'exemple précédent, l'image obtenue par un conducteur dont le véhicule est équipé d'un système de rétrovision tel que décrit précédemment en relation avec la figure 1. Le système optique que forme le rétroviseur et le dioptre (la fixe avant) étant catadioptrique et l'axe optique du conducteur étant différent de celui du dioptre, l'optimisation des caractéristiques optiques du système de rétrovision selon l'invention, en particulier du rayon de courbure du dioptre, a été effectuée sur une station Silicon Graphics à l'aide du logiciel Studio© commercialisé par la société Alias Wavefront.

Les calculs du logiciel ont permis d'affiner la taille et la puissance optique dudit dioptre de telle façon que l'image restituée au conducteur ne soit pas ou peu distordue et ait une taille sensiblement identique voir agrandie par rapport à l'image obtenue par un miroir plan.

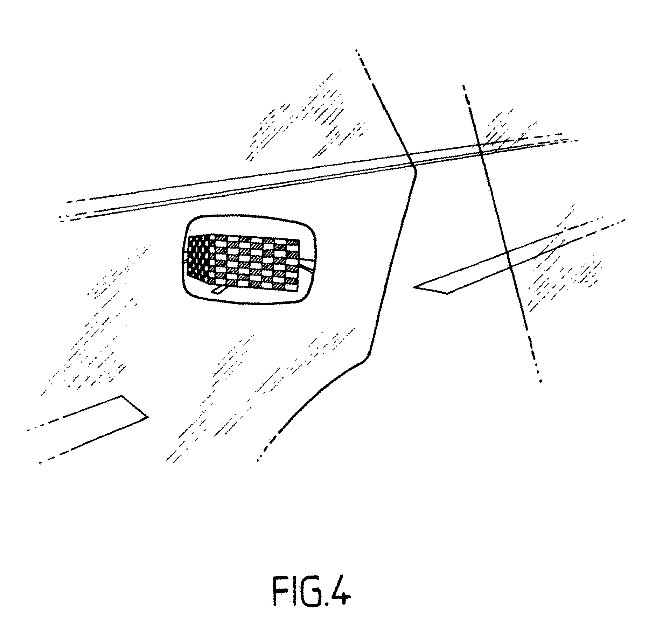

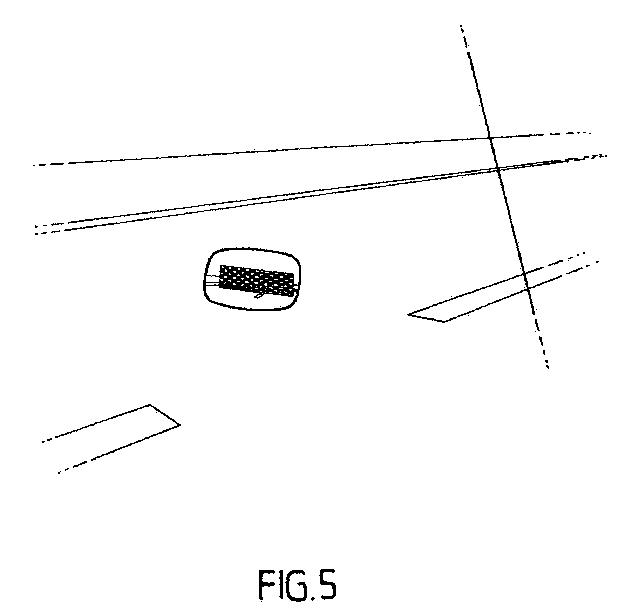

En particulier, grâce au logiciel Studio©, on a affiné par dichotomie le rayon de la lentille correspondant à un rendu optimal de l'image et susceptible de convenir quelque soit le point de vision du conducteur, en fonction de sa position de conduite, de sa taille et de sa morphologie, par exemple au sens de la norme européenne 2003/97/CE. Pour cet exemple, on a utilisé un rétroviseur comprenant un miroir convexe de rayon 0,450m et deux fois plus petit que les rétroviseurs de l'art antérieur. Comme on peut le voir par comparaison des figures 4 et 5, le rétroviseur selon l'invention a une surface deux fois plus petite que celle du rétroviseur asphérique selon l'art antérieur.

Si la face extérieure du dioptre est plane (R1=∞), on obtient, après affinement du logiciel, une valeur optimale du rayon de courbure intérieur du dioptre R2= 0,425m.

Dans ces conditions, l'image du véhicule observée par le conducteur est agrandie d'un facteur γ = 2,96 par rapport à l'image formée par le miroir sphérique convexe 6.

On a également simulé à partir du logiciel Studio© les images de l'objet que perçoit le conducteur.

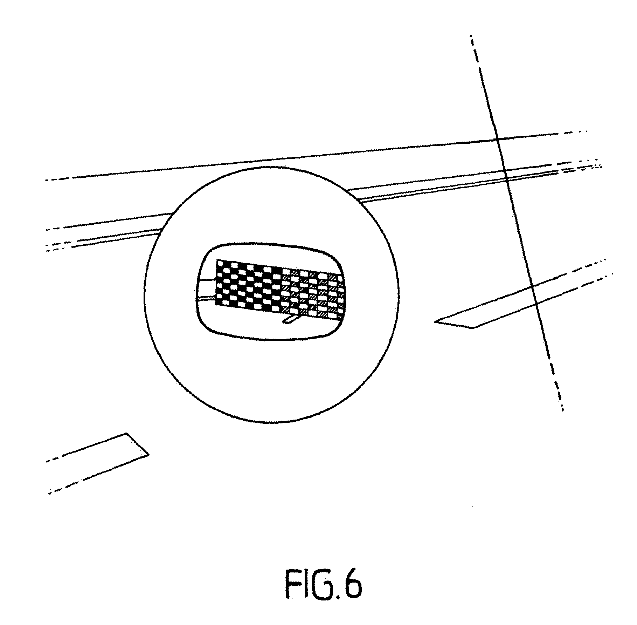

Plus particulièrement, la figure 4 montre l'image finale obtenue de la mire pour la simulation d'un rétroviseur asphérique selon la technique antérieure, la figure 5 l'image obtenue par le miroir convexe avant correction, et la figure 6 l'image de la mire perçue par le conducteur après correction par le dioptre inséré sur la vitre avant du véhicule.

La comparaison des figures 4, 5 et 6 montre que le système de rétrovision selon l'invention permet tout à la fois d'obtenir une image non déformée et de taille comparable à celle obtenue par un miroir plan, en utilisant un rétroviseur de taille deux fois inférieure et en minimisant les angles morts.

Bien entendu, l'invention n'est pas limitée aux modes de réalisation décrits. En particulier, il est possible sans sortir du cadre de l'invention d'utiliser un matériau autre que le polycarbonate, par exemple du verre ou un dioptre plan présentant un indice variable, constitué par exemple d'une plaque de verre feuilleté intégrant un feuillet de nature plastique tel que le PVB (poly-vinyl-butyral) d'indice optique variable. Selon un autre mode possible, on peut également utiliser comme dioptre une lentille de Fresnel adaptée en conséquence.

En outre, pour des raisons de simplicité, les exemples 1 et 2 ont été calculés pour un système optique simple dans lequel le dioptre correctif est idéalement disposé selon l'axe optique constitué par les yeux du conducteur et le rétroviseur (voir figure 3). Lorsque ledit dioptre est disposé sur la vitre latérale d'un véhicule, sa position diffère en général sensiblement de ce cas idéal et le rayon de courbure du dioptre pourra notamment être adapté et ajusté à chaque situation, notamment en fonction des positions respectives du rétroviseur, de l'oeil du conducteur et de la vitre latérale, selon des techniques et calculs couramment utilisés dans le domaine de l'optique. En particulier un rayon de courbure non constant du dioptre utilisé peut être envisagé selon l'invention pour résoudre ce problème.

Egalement, le dioptre peut être placé sur l'une quelconque des vitres du véhicule (vitre latérale droite comme décrit, vitre latéral gauche, lunette arrière etc., le rétroviseur associé étant bien évidemment disposé en conséquence, à l'intérieur ou à l'extérieur du véhicule.

**Revendications**

1.  Système de rétrovision pour véhicule automobile, permettant de restituer une image non déformée d'un objet, **caractérisé en ce qu'**il comprend un ensemble catadioptrique d'au moins un rétroviseur extérieur incluant un miroir non plan et un dioptre formant partie de la vitre latérale du véhicule ou intégré à celle-ci, ledit miroir et ledit dioptre étant configurés et agencés de telle manière que l'image de l'objet restituée par l'ensemble miroir-dioptre ne soit pas ou sensiblement pas déformée et de telle manière que l'angle mort ou la zone non couverte par ledit système soit minimisé.

2.  Système selon la revendication 1, dans lequel ledit miroir et ledit dioptre sont également configurés et agencés de telle manière que l'image restituée de l'objet par l'ensemble miroir-dioptre soit sensiblement identique ou agrandie par rapport à celle obtenue par un miroir plan.

3.  Système selon la revendication 1, dans lequel les dimensions de l'image restituée par l'ensemble miroir-dioptre sont comprises entre 1 fois et 2 fois celles obtenues par un miroir plan, de préférence entre 1 et 1,5 fois celles obtenues par un miroir plan.

4.  Système selon l'une des revendications précédentes, dans lequel le miroir non plan est du type sphérique convexe, du type sphérique concave, torique.

5.  Système selon l'une des revendications précédentes, dans lequel le dioptre présente au moins une face du type sphérique concave ou convexe, torique.

6.  Système selon l'une des revendications précédentes, dans lequel ledit dioptre est du type lentille mince ou du type lentille de Fresnel.

7.  Système selon la revendication 6, dans lequel le miroir non plan est du type sphérique convexe et dans lequel ladite lentille est convergente.

8.  Système selon l'une des revendications précédentes, dans lequel le dioptre présente un rayon de courbure non constant.

9.  Système selon l'une des revendications 1 à 5, dans lequel ledit dioptre est plan et présente un indice variable.

10. Système selon l'une des revendications précédentes, dans lequel le dioptre est fabriqué en verre ou dans une matière plastique dure telle que le polycarbonate.

11. Système selon la revendication 10, dans lequel ledit dioptre est constitué d'une plaque de verre feuilleté intégrant un feuillet de matière plastique, tel que le PVB (poly-vinyl-butyral), d'indice optique variable.

12. Système selon l'une des revendications précédentes, dans lequel le dioptre constitue tout ou partie d'une fixe avant d'une vitre avant latérale d'un véhicule automobile.

13. Véhicule automobile intégrant le système selon l'une des revendications précédentes.

14. Vitre latérale pour véhicule automobile comprenant ou incorporant un dioptre selon l'une des revendications 5 à 12.

**Claims**

1.  A rearview system for a motor vehicle, enabling an undistorted image of an object to be restored, comprising a catadioptric assembly of at least one external rearview mirror comprising a nonplanar mirror and one diopter forming part of a side window of the vehicle or integrated therein, said mirror and said diopter being configured and arranged in such a way that the image of the object restored by the mirror-diopter assembly is not, or is substantially not, distorted and in such a way that the blind spot or zone not covered by said system is minimized.

2. The system as claimed in claim 1, wherein said mirror and said diopter are also configured and arranged in such a way that the image of the object restored by the mirror-diopter assembly is substantially identical to or is enlarged in relation to that obtained by a plane mirror.

3. The system as claimed in claim 1, wherein the dimensions of the image restored by the mirror-diopter assembly lie between 1 and 2 times those obtained by a plane mirror, preferably between 1 and 1.5 times those obtained by a plane mirror.

4. The system as claimed in one of the preceding claims, wherein the nonplanar mirror is of the convex spherical, concave spherical or toric type.

5. The system as claimed in one of the preceding claims, wherein the diopter has at least one face of the concave or convex spherical or toric type.

6. The system as claimed in one of the preceding claims, wherein said diopter is of the thin lens type or of the Fresnel lens type.

7. The system as claimed in claim 6, wherein the nonplanar mirror is of the convex spherical type and wherein said lens is convergent.

8. The system as claimed in one of the preceding claims, wherein the diopter has a non-constant radius of curvature.

9. The system as claimed in one of claims 1 to 5, wherein said diopter is plane and has a variable index.

10. The system as claimed in one of the preceding claims, wherein the diopter is made of glass or a hard plastic such as polycarbonate.

11. The system as claimed in claim 11, wherein said diopter consists of a laminated glass plate incorporating a sheet of plastic, such as PVB (polyvinyl butyral), with a variable optical index.

12. The system as claimed in one of the preceding claims, wherein the diopter constitutes all or part of a front fixture of a front side window of a motor vehicle.

13. A motor vehicle incorporating the system as claimed in one of the preceding claims.

14. A side window for a motor vehicle comprising or incorporating a diopter as claimed in one of claims 5 to 12.

**Patentansprüche**

1. Rückspiegelsystem für ein Kraftfahrzeug, das es erlaubt, ein nicht verzerrtes Abbild eines Gegenstands zu erzeugen, **dadurch gekennzeichnet, dass** es eine katadioptrische Einheit aus mindestens einem einen unebenen Spiegel enthaltenden Außenrückspiegel und einem Diopter, das Bestandteil der Seitenscheibe des Fahrzeugs oder in diese integriert ist, umfasst, wobei dieser Spiegel und dieses Diopter derart, dass das von der Einheit Spiegel-Diopter erzeugte Abbild des Gegenstands nicht oder im Wesentlichen nicht verzerrt ist, und derart, dass der tote Winkel oder der von diesem System nicht erfasste Bereich minimiert wird, gestaltet und angeordnet sind.

2. System nach Anspruch 1, in welchem dieser Spiegel und dieses Diopter auch derart gestaltet und angeordnet sind, dass das von der Einheit Spiegel-Diopter erzeugte Abbild des Gegenstands in Bezug auf das von einem ebenen Spiegel erhaltene im Wesentlichen gleich oder größer ist.

3. System nach Anspruch 1, in welchem die Abmessungen des von der Einheit Spiegel-Diopter erzeugten Abbildes das 1-Fache bis 2-Fache und vorzugsweise zwischen dem 1-Fachen und 1,5-Fachen derjenigen betragen, die von einem ebenen Spiegel erhalten werden.

4. System nach einem der vorhergehenden Ansprüche, in welchem der unebene Spiegel von einem torischen Typ, konvexen oder konkaven Kugeltyp ist.

5. System nach einem der vorhergehenden Ansprüche, in welchem das Diopter mindestens eine Seite vom torischen Typ, konkaven oder konvexen Kugeltyp aufweist.

6. System nach einem der vorhergehenden Ansprüche, in welchem das Diopter vom Typ dünne Linse oder Fresnel-Linse ist.

7. System nach Anspruch 6, in welchem der unebene Spiegel vom konvexen Kugeltyp ist und in welchem die Linse eine Sammellinse ist.

8. System nach einem der vorhergehenden Ansprüche, in welchem das Diopter einen nicht konstanten Krümmungsradius aufweist.

9. System nach einem der Ansprüche 1 bis 5, in welchem das Diopter eben ist und einen veränderlichen Brechungsindex aufweist.

10. System nach einem der vorhergehenden Ansprüche, in welchem das Diopter aus Glas oder einem harten Kunststoff wie Polycarbonat hergestellt ist.

11. System nach Anspruch 10, in welchem das Diopter von einer Verbundglasscheibe mit veränderlichem Brechungsindex gebildet wird, in welche eine Folie aus einem Kunststoff wie PVB (Polyvinylbutyral) integriert ist.

12. System nach einem der vorhergehenden Ansprüche, in welchem das Diopter ganz oder teilweise einen vorderen festen Teil einer vorderen Seitenscheibe eines Kraftfahrzeugs bildet.

13. Kraftfahrzeug, in welches das System nach einem der vorhergehenden Ansprüche integriert ist.

14. Seitenscheibe für Kraftfahrzeuge, die ein Diopter nach einem der Ansprüche 5 bis 12 umfasst oder enthält.

FIG. 1

EP 1 827 907 B1

FIG. 2

FIG. 3

FIG.4

FIG.5

FIG.6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 3146486 A1
- FR 2794700